**Europäisches Patentamt**

**European Patent Office**

**Office européen des brevets**

(11) Veröffentlichungsnummer: **0 447 388 B1**

(12) **EUROPÄISCHE PATENTSCHRIFT**

(45) Veröffentlichungstag der Patentschrift: **14.12.94**

(51) Int. Cl.5: **C04B 35/56**, C04B 35/58

(21) Anmeldenummer: **91890038.2**

(22) Anmeldetag: **26.02.91**

(54) **Verfahren zur Herstellung von feinkörnigen, sinteraktiven Nitrid- und Carbonitridpulvern des Titans.**

(30) Priorität: **14.03.90 AT 607/90**

(43) Veröffentlichungstag der Anmeldung:
**18.09.91 Patentblatt 91/38**

(45) Bekanntmachung des Hinweises auf die
Patenterteilung:
**14.12.94 Patentblatt 94/50**

(84) Benannte Vertragsstaaten:
**AT CH DE DK FR GB IT LI LU SE**

(56) Entgegenhaltungen:
**DD-A- 205 632**
**DE-A- 2 910 596**
**DE-A- 3 608 264**

(73) Patentinhaber: **Treibacher Chemische Werke
Aktiengesellschaft
Postfach 31
A-9330 Treibach (AT)**

(72) Erfinder: **Zeiringer, Hans
Passering, Neubau
A-9321 Kappel/Krappfeld (AT)**

(74) Vertreter: **Kliment, Peter, Dipl.-Ing. Mag.-jur.
Singerstrasse 8/3/8
A-1010 Wien (AT)**

Rank Xerox (UK) Business Services
(3.10/3.09/3.3.3)

**Beschreibung**

Die Erfindung betrifft ein Verfahren zur Herstellung von feinkörnigen, sinteraktiven Nitrid- und/oder Carbonitridpulvern des Titans sowie gegebenenfalls anderer Metalle der IVA-, VA- und VIA- Gruppe des Periodensystems.

Schneidstoffe auf Basis von Wolframcarbid mit oder ohne Zusätze von Carbiden der Elemente aus der IVA-, VA- und VIA-Gruppe des Periodensystems sind als Hartmetalle schon lange bekannt und haben ein breites Anwendungsfeld gefunden. In den letzten Jahren wurde eine neue Gruppe von Schneidstoffen entwickelt, die unter dem Namen "Cermets" zusammengefaßt wird. Diese metallkeramischen Werkstoffe bestehen im wesentlichen aus einer metallischen Binderphase und einer keramischen Hartstoffkomponente wie Nitrid, Carbid oder Carbonitrid des Titans, gegebenenfalls mit Zusätzen von Carbiden, Nitriden oder Carbonitriden weiterer Elemente der IVA-, VA- und VIA-Gruppe des Periodensystems. Die metallische Binderphase ist im allgemeinen Nickel. Die Optimierung der Gebrauchseigenschaften für die verschiedenen Anwendungsbereiche kann durch Änderung des Binderphasenanteils, der Hartstoffteilchengröße, des Kohlenstoff-Stickstoffverhältnisses und durch Zusätze anderer Hartstoffe aus den angeführten Gruppen des Periodensystems erfolgen. Cermets-Schneidstoffe zeichnen sich im allgemeinen durch ein abgestimmtes Verhältnis von Verschleißwiderstand und Zähigkeit aus. Im Vergleich zu herkömmlichen Hartmetallen ist das günstigere Reibverhalten und die geringere Diffusionsneigung hervorzuheben. Sie eignen sich bevorzugt für das Bearbeiten duktiler Werkstoffe mit hohen Schnittgeschwindigkeiten bei mäßigen Schnittiefen mit dem Ziel, höchste Oberflächengüte in kürzestmöglicher Zeit zu erreichen. Die in Cermets enthaltenen Hartstoffkomponenten, insbesonders das Nitrid und/oder Carbonitrid des Titans sollen möglichst feinkörnig und rein sein. Ein besonderes Kriterium stellt der Sauerstoffgehalt dar, da er das Benetzungsverhalten gegenüber der Binderphase beeinflußt. In vielen Fällen kann es erwünscht sein, daß Zusätze von weiteren Carbiden und Nitriden bzw. Carbonitriden der Elemente aus der IVA-, VA- und VIA-Gruppe des Periodensystems in den Titancarbonitrid-Mischkristall homogen eingebaut werden.

Für die Herstellung von Titannitrid bzw. Titancarbonitrid mit und ohne weitere Zusätze sind aus der Literatur eine Reihe von Verfahrensmöglichkeiten bekannt.

Titancarbonitrid mit gegebenenfalls weiteren Zusätzen stellt man gegenwärtig überwiegend durch Reaktionsglühen einer Mischung bestehend aus Titancarbid und gegebenenfalls Zusätzen weiterer Carbide und Titannitrid unter Stickstoff bei Temperaturen um 1500 °C her. Eine weitere Möglichkeit insbesonders für die Herstellung von Nitriden besteht in der Umsetzung des entsprechenden Metallpulvers mit Stickstoff, wobei auch Kohlenstoff zugefügt sein kann. Nach der schon 1925 von E. Friederich und L. Sittig untersuchten Reaktion von Titanoxid mit Kohlenstoff und Stickstoff erhält man ebenfalls Titannitrid mit mehr oder weniger hohem Kohlenstoffgehalt. Bei der angewandten Reaktionstemperatur um 1250 °C erhielt man meist ein bläuliches Produkt, was auf einen hohen Sauerstoffinhalt hinwies. Um einen geringen Sauerstoffinhalt im Produkt zu erreichen, sind erfahrungsgemäß Temperaturen um 2000 °C erforderlich. Das dabei erhaltene sauerstoffarme Nitrid bzw. Carbonitrid weist eine Korngröße auf, die es notwendig macht, das Produkt einer aufwendigen Feinmahlung in Kugelmühlen, Attritoren usw. zu unterziehen. Dabei gelangen unerwünschte Fremdstoffe ins Mahlgut. In vielen Fällen erreicht man kaum die für den Einsatz übliche Korngröße von < 2 $\mu$m. Durch Umsetzung von Titantetrachlorid mit Stickstoff und Wasserstoff oder Ammoniak erhält man sehr feinkörniges Titannitrid. Die hohen Kosten und das an Luft wegen der geringen Korngröße sehr unbeständige Produkt sind der Nachteil dieses Verfahrens.

Aufgabe der Erfindung war es daher, diese Nachteile zu vermeiden und ein Verfahren zu entwickeln, das bei Einsatz von Titanoxid oder gegebenenfalls einer Mischung von Oxiden durch Reduktion mit Kohlenstoff in Gegenwart von Stickstoff oder einem stickstoffabgebenden Gas ein Nitrid oder Carbonitrid ergib, das ohne nennenswerte Nachvermahlung in ausreichend geringer Korngröße im Bereich < 2 $\mu$m und hoher Reinheit anfällt und so zur Herstellung von Cermets hervorragend geeignet ist.

Überraschenderweise konnte diese Aufgabe erfindungsgemäß dadurch gelöst werden, daß das Verfahren folgende Schritte umfaßt:

- Einbringen eines Reaktionsgemisches, bestehend aus Oxiden des Titans und gegebenenfalls anderer Metallen der IVA-, VA- und VIA- Gruppe des Periodensystems und einem kohlenstoffhaltigen Stoff in den Reaktor;
- Herstellung einer Stickstoffatmosphäre im Reaktor bei vermindertem Druck;
- Erwärmung des Reaktorinhaltes auf eine Temperatur zwischen 800 °C und 2000 °C, vorzugsweise zwischen 1000 °C und 1900 °C und Halten im Temperaturbereich zwischen 1400 °C und 1800 °C unter gleichzeitiger Abführung der gasförmigen Reaktionsprodukte, wobei Stickstoff oder ein stickstoffabgebendes Gas durch oder über die Reaktionsmischung geführt wird;
- Abkühlung des Reaktorinhaltes.

Vorteilhafte Weiterbildungen der Erfindung sind in den Unteransprüchen angegeben.

Der Siebboden am Reaktionsgefäß und die darunterliegende, gegenüber dem Ofenraum gasdicht abgeschlossene Einströmkammer soll die Strömung des Stickstoffs während der Glühbehandlung durch die Ansatzmischung gewährleisten, wobei im darüberliegenden Ofenraum vorzugsweise ein möglichst gutes Grob- oder Feinvakuum im Bereich von etwa 1 - 40 mbar herrschen soll. Der durch den Ansatz fließende Stickstoffstrom ist für den Erfolg des erfindungsgemäßen Verfahrens entscheidend. Er kann durch den Einströmvordruck bzw. durch die Druckdifferenz gegenüber dem evakuierten Ofenraum in weiten Grenzen variiert werden. Für eine erfolgreiche Durchführung des Verfahrens soll der Stickstoffstrom bezogen auf die sich während der Reaktion ändernde spezifische Oberfläche der Reaktionsmischung im Bereich von 0,1 - 5 cm$^3$/m$^2$ und Stunde betragen. Je nach der Art des verwendeten Reaktors kann der Stickstoffstrom durch die Reaktionsmischung geführt werden oder auch, falls diese in dünnen Schichten vorliegt über diese hinweg geführt werden. In jedem Fall muß sichergestellt werden, daß die Reaktionsprodukte wie CO und dgl. sehr rasch abgeführt werden.

Bei der eigentlichen Durchführung des Verfahrens wird nach Einführen des mit der Oxid- und Kohlenstoffmischung gefüllten Reaktionsgefäßes in dem mit einer Heizung ausgestatteten evakuierbaren Kessel dieser zur Entfernung des Sauerstoffs abgepumpt und mehrmals mit Stickstoff geflutet. Nach Erreichen eines Vakuums von < 1 mbar wird mit dem Aufheizen begonnen. Ab einer Temperatur von ca. 800 - 1000 °C setzt die Reduktion der oder den Oxides ein. Gleichzeitig damit wird mit dem Einströmen des Stickstoffs begonnen.

Die möglichst vollständige Reduktion der Oxide und Bildung der Nitride bzw. Carbonitride wird gewahrleistet durch eine längere Haltezeit bei ca. 1600 °C unter strömendem Stickstoff. Um den Sauerstoffinhalt im Produkt auf Werte von < 0,5 % abzusenken. ist das Erhöhen der Temperatur auf ca. 1800 °C erforderlich, wobei die Haltezeit bei dieser Temperatur möglichst kurz im Bereich von 1 - 2 Stunden liegen soll. Das nach dem Erkalten des Ofeninhalts gewonnene Produkt lag durchschnittlich in einer Korngröße von < 2 μm vor. Der Sauerstoffinhalt bewegte sich in Bereichen von 0,05 - 0.2 %. Die erforderliche leichte Nachvermahlung ist nur zur Beseitigung von Agglomeraten erforderlich. Die nach dem erfindungsgemäßen Verfahren hergestellten Materialien zeichnen sich besonders durch ihre hohe Reinheit, gute Verpreßbarkeit und Sinterbarkeit bei niederen Sintertemperaturen aus. Als Ursache dafür ist der geringe Sauerstoffinhalt, die geringe Korngroße und die sphärische Kornform anzunehmen.

Vorzugsweise wird das Verfahren so geführt, daß der Reaktor während der Erwärmung und dem Halten der Temperatur evakuiert wird, wobei der Gesamtdruck 100 mbar, vorzugsweise 10 mbar nicht übersteigt. Dadurch kann der Partialdruck der abzuführenden Reaktionsgase sehr gering gehalten werden.

Es hat sich als besonders günstig herausgestellt, wenn wahrend der Erwärmung und dem Halten der Temperatur kontinuierlich ein Stickstoffstrom durch oder über die Reaktionsmischung geleitet wird, der zwischen 0,2 und 5 l pro Minute und kg Reaktionsgemisch und vorzugsweise zwischen 0,5 bis 2 l pro Minute und kg Reaktionsgemisch beträgt.

Das erfindungsgemäße Verfahren soll anhand von Beispielen, die aber nicht einschränkend sein sollen, näher dargestellt werden.

**Beispiel 1 (Vergleichsbeispiel)**

872 g Titanoxid und 329,3 g Flammruß wurden in einem Pflugscharzwangsmischer gut vermischt. Die Mischung wurde in einem Graphitreaktor ohne Siebboden gestampft. Nach Glättung der Oberfläche der festgestampfen Mischung brachte man in diese unter Ausnützung einer Schablone Bohrungen mittels einer Stahlnadel ein. Das Reaktionsgefäß mit Inhalt wurde darauf in eine Widerstandsheizung gestellt, die innerhalb eines Vakuumkessels montiert war. Nach Schließen des Vakuumkessels wurde der Kesselinhalt vorsichtig auf einen Druck von < 1 mbar evakuiert und in der Folge zweimal mit Stickstoff geflutet. Bei einem Druck von ca. 1 - 10 mbar Stickstoff begann man mit dem Aufheizen des Reaktionsansatzes. Die Aufheizgeschwindigkeit betrug 10 - 20 °C/Min. Ab einer Temperatur von 800 °C- 1000 °C zeigte allmählicher Druckanstieg die beginnende Reduktion des Oxids an. Ab diesem Zeitpunkt setzte man mit dem Absaugen der Reaktionsgase soweit ein, daß ein Kesseldruck von 300 mbar nicht überschritten wurde. Nach nachlassen der Reaktion ab etwa 1500 °C - 1600 °C wurde der Kessel auf etwa 400 - 500 mbar mit Stickstoff angefüllt und die Temperatur 5 Stunden bei 1600 °C und einem Stickstoffdruck um 500 mbar gehalten. Danach wurd die Temperatur in einem Fall auf 1800 °C und im anderen Fall auf 1950 °C erhöht. Die Aufheizgeschwindigkeit betrug in beiden Fällen zirka 20 °C/Min. Die Haltezeit bei der Endtemperatur legte man auf 1,5 Stunden fest. Der Kesseldruck wurde mit 500 mbar konstant gehalten. Nach Erkalten des Tiegelinhalts erhielt man aus den beiden Versuchen Produkte mit folgenden chemischen und physikalischen Eigenschaften:

|  | Endtemperatur 1800°C | Endtemperatur 1950°C |
|---|---|---|
| Ausbringung | 664,5 g | 655,3 g |
| % C ges. | 10,79 | 11,04 |
| % C frei | 0,05 | 0,05 |
| % N | 9,3 | 9,0 |
| % O | 1,16 | 0,34 |
| durchschnittliche Korngröße in μm | 2,89 | 6,0 |

Um die aus den beiden Versuchen erhaltenen Materialien auf eine durchschnittliche Korngröße von < 2 μm zu bringen, wurde die 1800 °C-Probe eine Stunde und die 1950 °C-Probe drei Stunden im Laborattritor mit Hartmetallkugelfüllung unter wasserfreiem Leicht-benzin gemahlen. Die nach Entfernen der Mahlflüssigkeit im Vakuum-trockner erhaltenen Produkte hatten folgende Zusammensetzung und durchschnittliche Korngröße:

|  | Endtemperatur 1800°C | Endtemperatur 1950°C |
|---|---|---|
| % C ges. | 10,5 | 11,0 |
| % C frei | 0,05 | 0,05 |
| % N | 9,1 | 8,9 |
| % O | 1,2 | 0,74 |
| % W | 0,78 | 1,38 |
| % Fe | 0,04 | 0,1 |
| durchschnittliche Korngröße in μm | 1,95 | 2,0 |

Wie die Zusammensetzung der beiden Produkte zeigt, wurde dieses relativ stark durch den Abrieb des Mühlengefäßes und der Mahlkugeln verunreinigt. Außerdem stieg der Sauerstoffinhalt unerwünscht stark an.

**Beispiel 2**

872 g Titanoxid und 329,3 g Flammruß wurden wie im Beispiel 1 gut vermischt und die Mischung in einen Reaktor mit Siebboden aus Graphit eingestampft. Nach Anbringen einer Vielzahl von Gaskanälen mittels einer Stahlnadel wurde der Tiegel auf die innerhalb einer Widerstandsheizung montierte Einströmkammer gasdicht aufgesetzt. Anschließend schloß man den Kesseldeckel und evakuierte den Kesselinhalt zur Entfernung des Sauerstoffs, wobei zwischendurch zweimal mit Stickstoff gespült wurde. Bei einem Kesseldruck von 1 10 mbar begann man wie im Beispiel 1 mit dem Aufheizen des Ansatzes. Ab einer Temperatur von 800 - 1000 °C zeigte auch hier allmählicher Druckanstieg die beginnende Reaktion an. Ab diesem Zeitpunkt wurde voll mit dem Absaugen der Reaktionsgase begonnen, während gleichzeitig ein Stickstoffstrom von 1 l/min durch den Ansatz geleitet wurde. Der Totaldruck im Kessel erreichte fallweise Werte bis zu 10 mbar. Durchschnittlich lag er um 1 - 2 mbar. Nach Erreichen einer Temperatur um 1600 °C hielten wir diesen Temperaturbereich 5 Stunden lang. Anschließend erhöhte man die Temperatur wie im Beispiel 1 auf 1800 °C und hielt den Ansatz in diesem Bereich 1,5 Stunden. Das nach dem Abkühlen des Ansatzes erhaltene Produkt hatte folgende chemische und physikalische Eigenschaften:

```
Ausbringung:                 645,8 g
% C ges.                      10,46
% C frei                       0,05
% N                           10,7
% O                            0,06
durchschnittliche
Korngröße in µm                1,7
```

Zur Beseitigung der Agglomerate wurde das im Beispiel 2 erhal-tene Material 30 Minuten im Laborattritor mit Hartmetallkugelfül-lung unter wasserfreiem Benzin gemahlen. Das nach Entfernen der Mahlflüssigkeit im Vakuumtrockner erhaltene Produkt zeigte folgende Qualitätskenndaten:

```
% C ges.                      10,5
% C frei                       0,05
% N                           10,5
% O                            0,18
% W                            0,21
% Fe                           0,01

durchschnittliche
Korngröße   in  µm             1,55
```

Aufgrund des geringen Sauerstoffinhaltes und der geringen Korngröße ist das erfindungsgemäße Produkt hervorragend zur Herstellung von Cermets geeignet.

**Beispiel 3**

891,9 g $TiO_2$ und 308,1 g Flammruß wurden wie im Beispiel 1 gut gemischt und die Mischung anschließend mit einem Preßdruck von 5 $t/cm^2$ zu Tabletten verpreßt. Diese wurden in der Folge in ein Reaktionsgefäß aus Graphit mit Siebboden geschlichtet. Die weitere Behandlung erfolgte wie im Beispiel 2. Das nach der 30minütigen Deagglomerierung im Attritor erhaltene Produkt zeigte folgende Kenndaten:

```
% C ges.                       6,03
% C frei                       0,05
% N                           16,5
% O                            0,15
% W                            0,25
% Fe                           0,01
durchschnittliche
Korngröße in µm                1,95
```

**Beispiel 4**

800 g Titanoxid, 87,4 g Tantaloxid und 89,7 g Wolframoxid wurden mit 336 g Flammruß wie im Beispiel 1 gut vermischt und mit einem Preßdruck von 5 t/cm2 zu Tabletten verpreßt. Die weitere Behand-lung der Tabletten erfolgte wie im Beispiel 2 und 3. Das nach der Deagglomerierung im Attritor erhaltene Produkt hatte folgende chemische und physikalische Eigenschaften:

```
% C ges.              9,2
% C frei              0,05
% N                   9,2
% O                   0,20
% W                   9,4
% Ta                  9,4
% Fe                  0,01
durchschnittliche
Korngröße in µm       1,75
```

Nach den Ergebnissen der Beispiele 2 - 4 sind nach dem erfindungsgemäßen Verfahren Carbonitride des Titans und gegebenenfalls Zusätze von Elementen der IVA-, VA- und VIA-Gruppe herstellbar, die sich aufgrund der Korngröße und des Gehalts an Verunreinigungen hervorragend zur Herstellung von Cermets eignen.

**Patentansprüche**

1. Verfahren zur Herstellung von feinkörnigen, sinteraktiven Nitrid- und/oder Carbonitridpulvern des Titans sowie gegebenenfalls anderer Metalle der IVA-, VA- und VIA- Gruppe des Periodensystems, das folgende Schritte umfaßt:
   - Einbringen eines Reaktionsgemisches, bestehend aus Oxiden des Titans und gegebenenfalls anderer Metallen der IVA-, VA- und VIA- Gruppe des Periodensystems und einem kohlenstoffhaltigen Stoff in den Reaktor;
   - Herstellung einer Stickstoffatmosphäre im Reaktor bei vermindertem Druck;
   - Erwärmung des Reaktorinhaltes auf eine Temperatur zwischen 800°C und 2000°C, vorzugsweise zwischen 1000°C und 1900°C und Halten im Temperaturbereich zwischen 1400°C und 1800°C unter gleichzeitiger Abführung der gasförmigen Reaktionsprodukte, wobei Stickstoff oder ein stickstoffabgebendes Gas durch oder über die Reaktionsmischung geführt wird;
   - Abkühlung des Reaktorinhaltes.

2. Verfahren nach Anspruch 1, dadurch gekennzeichnet, daß im Anschluß an die Abkühlung eine Deagglomerierung oder Vermahlung in inerter Umgebung durchgeführt wird.

3. Verfahren nach einem der Ansprüche 1 oder 2, dadurch gekennzeichnet, daß der Reaktor während der Erwärmung und dem Halten der Temperatur evakuiert wird, wobei der Gesamtdruck 100 mbar, vorzugsweise 10 mbar nicht übersteigt.

4. Verfahren nach einem der Ansprüche 1 bis 3, dadurch gekennzeichnet, daß während der Erwärmung und dem Halten der Temperatur kontinuierlich ein Stickstoffstrom durch oder über die Reaktionsmischung geleitet wird, der zwischen 0,2 und 5 l pro Minute und kg Reaktionsgemisch und vorzugsweise zwischen 0,5 bis 2 l pro Minute und kg Reaktionsgemisch beträgt.

5. Verfahren nach einem der Ansprüche 1 bis 4, dadurch gekennzeichnet, daß das Halten in Stufen bei verschiedenen Temperaturen durchgeführt wird.

**6.** Verfahren nach einem der Ansprüche 1 bis 5, dadurch gekennzeichnet, daß die Reaktionsmischung in Form von Pellets oder Briketts in den Reaktor eingebracht wird.

**7.** Verfahren nach einem der Ansprüche 1 bis 5, dadurch gekennzeichnet, daß die Reaktionsmischung verdichtet wird und mit einer Vielzahl von Kanälen versehen wird.

**Claims**

**1.** A method for producing fine grained, sintering active nitride and/or carbonitride powders of titanium as well as, optionally, of other metals of the IVA, VA and VIA group of the periodic table of elements, said method comprising the following steps:
- The introduction into the reactor of a reaction mixture consisting of oxides of titanium and, optionally, of other metals of the IVA, VA and VIA group of the periodic system and a carbonaceous material;
- providing a nitrogen atmosphere in the reactor at a decreased pressure;
- heating the content of the reactor to a temperature of between 800°C and 2000°C, preferably between 1000°C and 1900°C, and keeping the temperature within a range of between 1400°C and 1800°C with simultaneous carrying-off of the gaseous reaction products, whereby nitrogen or a gas delivering nitrogen is guided through or over the reaction mixture;
- cooling off of the content of the reactor.

**2.** A method as claimed in claim 1, characterized in that after the cooling off a deagglomeration or comminution is carried out in an inert environment.

**3.** A method as claimed in one of the claims 1 or 2, characterized in that the reactor is evacuated during the heating process and the keeping of the temperature, whereby the overall pressure is not to exceed 100 mbar, preferably 10 mbar.

**4.** A method as claimed in one of the claims 1 to 3, characterized in that during the heating and the keeping of the temperature a flow of nitrogen is continuously directed either through or over the reaction mixture, said flow being between 0.2 and 5 L per minute and per kg of the reaction mixture, preferably between 0.5 and 2 L per minute and per kg of the reaction mixture.

**5.** A method as claimed in one of the claims 1 to 4, characterized in that said keeping of temperatures is performed in steps at different temperatures.

**6.** A method as claimed in one of the claims 1 to 5, characterized in that the reaction mixture is placed in the reactor as pellets or briquets.

**7.** A method as claimed in one of the claims 1 to 5, characterized in that the reaction mixture is compacted and provided with a plurality of channels.

**Revendications**

**1.** Procédé de fabrication de poudres en grain fin, à activité de frittage, de nitrure et/ou de carbonitrure de titane, ainsi qu'éventuellement d'autres métaux des groupes IVA, VA et VIA du Système ou Tableau Périodique des Eléments, ce procédé comportant les étapes suivantes :
- introduction d'un mélange réactionnel, consistant en des oxydes du titane et éventuelelment d'autres métaux des groupes IVA, VA et VIA du Tableau Périodique, et d'une matière contenant du carbone, dans le réacteur;
- production d'une atmosphère d'azote dans le réacteur, sous pression réduite;
- chauffage du contenu du réacteur à une température comprise entre 800°C et 2000°C, avantageusement entre 1000°C et 1900°C, et maintien dans un intervalle de la température compris entre 1400°C et 1800°C avec éloignement simultané des produits gazeux de réaction, de l'azote ou un gaz cédant de l'azote étant acheminé de manière que ce gaz traverse le mélange réactionnel ou passe sur lui;
- refroidissement du contenu du réacteur.

7

2. Procédé selon la revendication 1, caractérisé en ce qu'après le refroidissement, on effectue une désagglomération ou une mouture de broyage dans un environnement inerte.

3. Procédé selon l'une des revendications 1 ou 2, caractérisé en ce que, pendant le chauffage et le maintien de la température, le réacteur est maintenu sous dépression, la pression totale n'excédant pas 100 mbars et avantageusement n'excédant pas 10 mbars.

4. Procédé selon l'une des revendications 1 à 3, caractérisé en ce que, pendant le chauffage et le maintien en température, on achemine en continu un courant d'azote qui traverse le mélange réactionnel ou passe sur ce mélange réactionnel et qui est compris entre environ 0,2 et 5 l par minute et kg du mélange réactionnel et est compris avantageusement entre 0,5 et 2 l par minute et par kg du mélange réactionnel.

5. Procédé selon l'une des revendications 1 à 4, caractérisé en ce qu'on effectue le maintien par étapes réalisées à des températures différentes.

6. Procédé selon l'une des revendications 1 à 5, caractérisé en ce que le mélange réactionnel est introduit dans le réacteur en étant sous forme de pastilles ou de briquettes.

7. Procédé selon l'une des revendications 1 à 5, caractérisé en ce que le mélange réactionnel est compacté et est muni d'un grand nombre de canaux.